Europäisches Patentamt

European Patent Office

Office européen des brevets

(11) Numéro de publication: **0 197 836**

**B1**

(12) **FASCICULE DE BREVET EUROPÉEN**

(45) Date de publication du fascicule du brevet:
**31.05.89**

(21) Numéro de dépôt: **86400629.1**

(22) Date de dépôt: **25.03.86**

(51) Int. Cl.⁴: **F 24 D 19/10, G 05 D 23/19**

(54) **Procédé de transformation d'une installation de chauffage préexistante et dispositif de commande pour la mise en oeuvre du procédé.**

(30) Priorité: **28.03.85 FR 8504665**

(43) Date de publication de la demande:
**15.10.86 Bulletin 86/42**

(45) Mention de la délivrance du brevet:
**31.05.89 Bulletin 89/22**

(84) Etats contractants désignés:
**AT BE CH DE GB IT LI LU NL SE**

(56) Documents cité:
**DOSSIER TECHNIQUE PERCHE C ET PERCHE T, La Régulation. Principe et exemples de solutions, juillet 1984, Electricité de France, pages 1-15**

(73) Titulaire: **ELECTRICITE DE FRANCE Service National, 2, rue Louis Murat, F-75008 Paris (FR)**

(72) Inventeur: **Pichot, Jacky, 4, rue Haute, F-77130 La Grande Paroisse (FR)**
Inventeur: **Oddou, Jacques, 18, rue Carnot, F-77300 Fontainebleau (FR)**

(74) Mandataire: **Martin, Jean- Jacques, Cabinet REGIMBEAU 26, Avenue Kléber, F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

La présente invention concerne le domaine du chauffage.

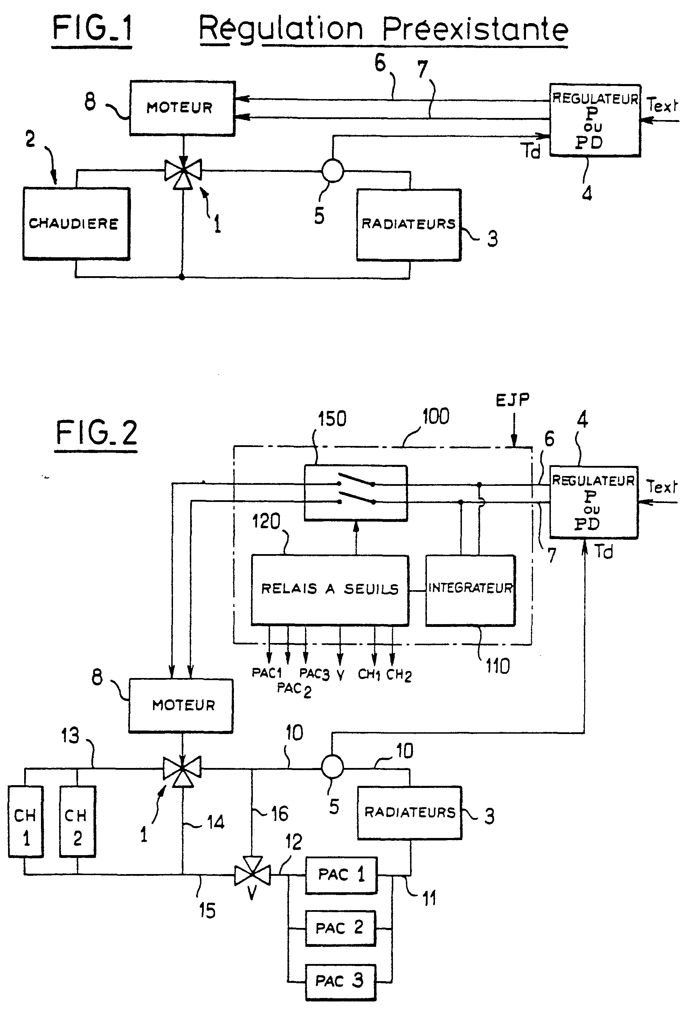

La présente invention concerne plus précisément un procédé de transformation d'une installation de chauffage préexistante du type illustré sur la figure 1 annexée, dont la structure sera décrite par la suite, ainsi qu'un dispositif de commande pour la mise en oeuvre de ce procédé.

D'une façon générale, l'installation de chauffage à eau chaude illustrée sur la figure 1 annexée comprend une vanne mélangeuse modulante 1 à trois voies pour régler la température de départ d'eau fournie par une chaudière 2 à un ensemble de radiateurs 3 en fonction de la température extérieure.

La vanne 1 est commandée par un régulateur 4 du type proportionnel-P- ou proportionnel dérivé-PD- comparant la température extérieure Text à la température de départ d'eau Td, qui est mesurée en 5 entre la vanne et l'ensemble de radiateurs et générant deux signaux tout ou rien de fermeture ou d'ouverture (sur les lignes 6 et 7), pour actionner en conséquence un moteur 8 associé à la vanne 1.

La présente invention a maintenant pour but de perfectionner une telle installation préexistante par adjonction d'une pluralité de générateurs auxiliaires, tels que des pompes à chaleur, en relève du générateur de chauffage principal, tout en limitant le coût d'une telle transformation, et en particulier en conservant les régulateur et vanne existants.

La régulation proposée selon l'invention a en particulier pour but d'assurer:

- la priorité de fonctionnement des générateurs auxiliaires-pompes à chaleur sur la chaudière classique, en autorisant, le cas échéant, un fonctionnement simultané où la chaudière apporte ce que les pompes à chaleur ne peuvent fournir lorsque les besoins dépassent la puissance des pompes à chaleur.

- la commande en tout ou rien des pompes à chaleur avec des temps de marche et d'arrêt suffisamment longs pour un fonctionnement optimum,

- la commande de la vanne mélangeuse en progressif ainsi que l'autorisation de marche de la chaudière celle-ci restant asservie à son thermostat.

Les régulations classiques préexistantes 4 du type P ou PD étant inadaptées pour la commande en cascade d'une pluralité de générateurs auxiliaires, la présente invention vient proposer un procédé de transformation d'une installation de chauffage préexistante comprenant un générateur de chauffage principal, du genre chaudière, associé à une vanne mélangeuse modulante pilotée par un régulateur du type P ou PD, sensible, d'une part, à la température extérieure, d'autre part, à la température de départ d'eau, par adjonction d'une pluralité de générateurs auxiliaires tels que des pompes à chaleur en relève du générateur de chauffage principal et avec conservation des régulateur et vanne existants, caractérisé par le fait qu'il comprend l'étape consistant à insérer entre le régulateur préexistant et la vanne préexistante un dispositif de commande comprenant un module intégrateur, des relais à seuils et un interrupteur, en connectant l'entrée du module intégrateur à la sortie du régulateur préexistant, en connectant les entrées des relais à seuils à la sortie du module intégrateur, en connectant les sorties des relais à seuils aux entrées respectives de mise en service des générateurs auxiliaires, de telles sorte que les générateurs auxiliaires soient mis successivement en service lors de la détection de seuils respectifs par les relais, en connectant l'interrupteur entre la sortie du régulateur préexistant et l'entrée de commande de la vanne mélangeuse et en connectant une sortie des relais à seuils validée en cas de dépassement de la demande de chauffage à une entrée de contrôle de l'interrupteur, afin d'autoriser, en cas de dépassement de la demande de chauffage, l'application des signaux provenant du régulateur préexistant, sur la vanne mélangeuse.

On a déjà proposé de nombreux types d'installation de chauffage associant des chaudières et des générateurs auxiliaires du type pompes à chaleur ou encore des procédés de transformation d'installations de chauffage préexistantes.

Toutefois, aucun des procédés ou dispositifs jusqu'ici proposés n'enseigne ni ne suggère la présente invention, et ne présente des caractéristiques directement comparables à la présente invention.

On a par exemple décrit dans la demande de brevet Française publiée sous le n° 2 501 837 une installation de chauffage comprenant une chaudière de chauffage et une pompe à chaleur contrôlée par un régulateur qui comporte: une première sonde mesurant la température de retour du fluide de chauffage, une seconde sonde mesurant la température extérieure, un convertisseur relié à la seconde sonde, un limiteur monté en aval du convertisseur, un comparateur attaqué d'une part par la sortie de la première sonde, d'autre part par la sortie du limiteur, un intégrateur monté en aval du comparateur et des interrupteurs à seuil commandés par l'intégrateur, des interrupteurs à seuil principaux assurant la mise en service respective des étages de compression de la pompe à chaleur, tandis qu'un interrupteur à seuil auxiliaire assure la mise en service de la chaudière.

Ce document cependant ne suggère pas de commander la vanne mélangeuse modulante par l'intermédiaire d'un dispositif associé au dispositif intégrateur.

Par ailleurs, ce document ne suggère pas de commander le régulateur par une sonde sensible à la température de départ du fluide de chauffage.

Pour ces raisons, les caractéristiques de l'installation décrite dans la demande de brevet Française 2 501 837 ne sont pas optimum.

Enfin, la demande de brevet Française 2 501 837 n'enseigne aucunement de réutiliser un régulateur

EP 0 197 836 B1

préexistant.

La demande de brevet Française publiée sous le n° 2 521 696 concerne également un régulateur pour installations de chauffage comprenant une chaudière et une pompe à chaleur en relève de la chaudière.

Ce régulateur comprend une sonde mesurant la température de départ de l'eau de chauffage, une sonde extérieure, un programmateur principal à microprocesseur relié aux deux sondes et deux programmateurs auxiliaires distincts commandant respectivement une régulation en tout ou rien de la pompe à chaleur seule ou de cette pompe en association avec la chaudière, et ce par l'intermédiaire de contacteurs, et une régulation concernant uniquement la chaudière et se matérialisant par une variation de débit de l'eau de sortie au moyen d'une vanne mélangeuse.

L'utilisation d'un programmateur à microprocesseur autorise certainement une grande souplesse dans la régulation.      .

Néanmoins, ce document n'enseigne ni la connexion d'un module intégrateur en sortie d'un régulateur type P ou PD préexistant, ni la commande d'une vanne mélangeuse à moteur réversible, ni l'association à un module intégrateur de relais à seuil pour assurer une commande étagée de pompes à chaleur.

Là encore, pour ces raisons, les caractéristiques d'une telle installation ne sont aucunement optimum.

Le document "CHAUD-FROID PLOMBERIE, volume 440 - Septembre 1983 - régulation d'une installation de chauffage PERCHE C et T pages 69 - 76" présente différents types de régulation.

La régulation illustrée sur la figure 9 de ce document propose d'intercaler un boîtier de commande entre une régulation préexistante et l'installation de chauffage proprement dite comprendant la vanne mélangeuse, la chaudière et les pompes à chaleur.

Le boîtier de commande intercalé entre le régulateur préexistant et l'installation de chauffage interprète à l'aide de temporisation réglables les ordres du régulateur préexistant pour commander pompes à chaleur et chaudière.

Ce document ne suggère aucunement de remplacer les temporisations réglables précitées par un intégrateur associé à des relais à seuil.

Des essais réalisés sur le matériel décrit dans le document précité ont montré que celui-ci présente diverses défaillances.

Enfin, le document "Revue générale de thermique, volume 21, octobre 82 Carasse - la pompe à chaleur en relève de chaudière existante dans les locaux tertiaires, Perche T, pages 795 - 809" présente également différents types de régulation.

Toutefois, ce document n'enseigne ni ne suggère d'adapter une régulation préexistante en insérant entre un régulateur préexistant, d'ailleurs conservé, sensible à la température de départ d'eau et la vanne préexistante, un dispositif de commande comprenant entre autre un module intégrateur et des relais à seuil.

La présente invention concerne également un dispositif de commande pour la mise en oeuvre du procédé précédemment défini qui comprend:

- un module intégrateur dont l'entrée est destinée à être reliée à la sortie d'un régulateur préexistant,
- des relais à seuils dont les entrées sont reliées à la sortie du module intégrateur, et les sorties sont destinées à être reliées aux entrées respectives de mise en service de générateurs auxiliaires, et
- un interrupteur destiné à être connecté entre la sortie de régulateur préexistant et l'entrée de commande de la vanne mélangeuse, une entrée de contrôle de l'interrupteur étant connectée à une sortie des relais à seuils qui est validée en cas de dépassement de la demande de chauffage.

Selon une caractéristique préférentielle de la présente invention, le module intégrateur compend au moins un compteur/ décompteur numérique.

Plus précisément, de façon avantageuse, le dispositif comprend deux relais commandés par les sorties du régulateur classique et servant à valider alternativement les entrées de comptage et de décomptage du module intégrateur.

Selon une caractéristique avantageuse de l'invention, le dispositif de commande comprend deux portes logiques à deux entrées dont les sorties attaquent respectivement les entrées de comptage et de décomptage du module intégrateur, l'une des entrées des portes logiques étant attaquée par un relais respectif, tandis que la seconde entrée de chaque porte logique est reliée à la sortie d'une horloge délivrant un signal oscillatoire de fréquence réglable.

Selon une autre caractéristique préférentielle de l'invention, le relais à seuil comprend une mémoire numérique ayant des lignes d'adresses reliées aux sorties du module intégrateur.

Afin d'éviter les problèmes intempestifs lies aux coupures d'alimentation électrique secteur, le dispositif de commande comprend de préférence un organe de mémorisation dont les entrées sont reliées aux sorties du compteur/décompteur numérique et les sorties sont reliees aux entrées de pré-sélection de ce dernier pour recharger le module intégrateur, après une coupure d'alimentation secteur à l'état occupé par ce module avant la coupure.

Selon une variante de réalisation avantageuse de l'invention, le dispositif de commande comprend de plus un organe de mémorisation dont l'entrée est connectée en sortie de la mémoire numérique contrôlant la mise en service d'une première chaudière et dont la sortie est reliée à une ligne d'adresse de la mémoire numérique pour définir une commande à hystérésis de cette première chaudière tel que dans le sens de l'enclenchement, la vanne s'ouvre avant la mise en service de la chaudière pour réchauffer le corps de la chaudière, mais que

3

dans le sens de l'arrêt, la vanne soit fermée avant l'arrêt de la chaudière.

Le dispositif de commande conforme à la présente invention comprend en outre de façon préférentielle des moyens aptes à détecter la validation des entrées de comptage ou de décomptage du module intégrateur et dont la sortie est reliée à une ligne d'adresse de la mémoire numérique pour déterminer les commandes à hystérésis des générateurs auxiliaires.

Là encore, pour éviter les problèmes liés aux coupures éventuelles d'alimentation électrique secteur, la sortie des moyens de détection de la validation des entrées de comptage ou de décomptage du module intégrateur est avantageusement reliée à la ligne d'adresse associée de la mémoire numérique par l'intermédiaire d'un organe de mémorisation.

Par ailleurs, selon l'invention, les organes de mémorisation précités sont constitués avantageusement de bascules alimentées par une source d'alimentation électrique continue.

D'autres caractéristiques et avantages de la présente invention apparaîtront à la lecture de la description détaillée qui va suivre et en regard des dessins annexés donnés à titre d'exemple non limitatif, et sur lesquels, la figure 1 ayant déjà été décrite:

- la figure 2 représente une vue schématique d'une installation de chauffage obtenue grâce au procédé de transformation conforme à la présente invention,
- la figure 3 illustre schématiquement la configuration des seuils du dispositif de commande conforme à la présente invention,
- la figure 4 illustre schématiquement un mode de réalisation considéré actuellement comme préférentiel du dispositif de commande conforme à la présente invention.

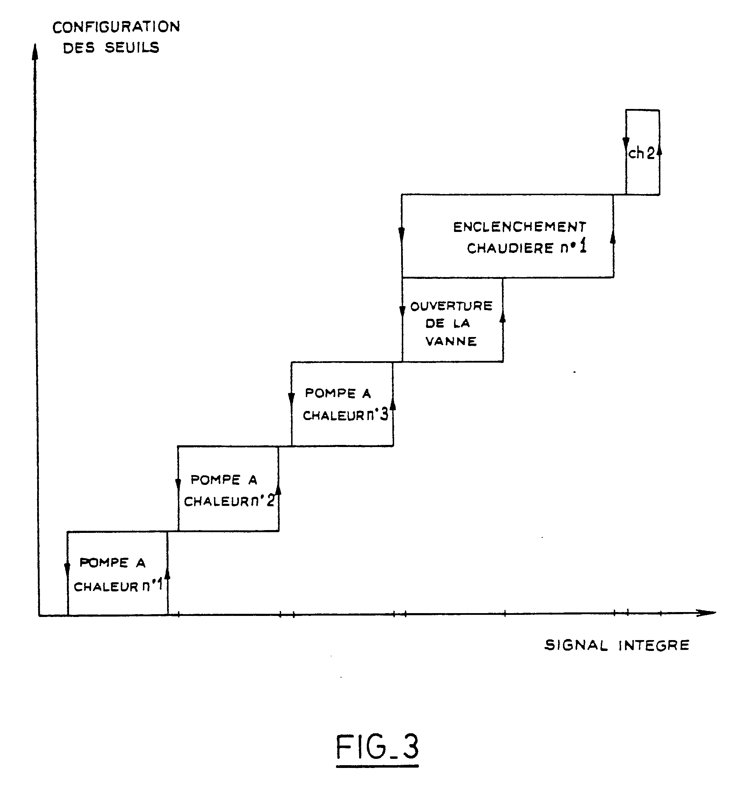

On va dans un premier temps décrire la structure générale de l'invention illustrée sur la figure 2 annexée.

On aperçoit sur cette figure un ensemble de générateurs de chauffage classiques comprenant différents générateurs connectés en parallèle, tels que des chaudières à fuel CH1, CH2.

L'eau chaude issue de ces chaudières CH1, CH2 est dirigée par l'intermédiaire d'une canalisation 13 vers la vanne mélangeuse classique 1 à trois voies.

L'une des voies 14 de cette vanne mélangeuse 1 classique est rebouclée sur l'entrée des générateurs de chauffage CH1, CH2.

L'autre voie de sortie 10 de la vanne mélangeuse 1 est reliée à l'entrée d'un ensemble de radiateurs 3 susceptible d'être formé de différents éléments séparés branchés en parallèle, mais schématiquement représentés sur la figure 2.

Une sonde 5 mesurant la température de départ du fluide $T_d$ est disposée sur la canalisation 10 précitée.

Le fluide évacué de l'ensemble de radiateurs 3 par une canalisation 11 traverse un ensemble de générateurs auxiliaires, ajoutés selon l'invention, tels que des pompes à chaleur PAC 1, PAC 2, PAC 3, ou des éléments fonctionnellement équivalents connectés en parallèle.

La sortie 12 commune aux générateurs de chauffage auxiliaires PAC 1, PAC 2, PAC 3 est reliée à une vanne de déviation ou by-pass référencée Y sur la figure 2. Cette vanne de déviation Y est une vanne à trois voies.

L'une des voies 15 de cette vanne de déviation est reliée à l'entrée des générateurs de chauffage classiques CH1, CH2.

L'autre voie de sortie 16 de cette vanne de déviation V est reliée à la conduite 10 précitée.

On reconnaît également sur la figure 2 le moteur 8 de commande de la vanne mélangeuse 1, le régulateur 4 de type P ou PD préexistant sensible d'une part à la température extérieure Text, d'autre part à la température de départ d'eau $T_d$, et qui délivre sur ses sorties 6, 7 des trains d'impulsions d'ordre d'ouverture ou de fermeture de la vanne mélangeuse classique, ainsi que le dispositif de commande 100 conforme à la présente invention inséré entre le régulateur préexistant 4 et la vanne mélangeuse 1.

Comme cela a été précédemment évoqué, ce dispositif de commande 100 comprend un module intégrateur 110 connecté à la sortie du régulateur préexistant et qui attaque des relais à seuil 120 commandant la mise en service successive des générateurs auxiliaires tels que pompes à chaleur PAC 1, PAC 2, PAC 3, lors de la détection des seuils respectifs, et enfin, un interrupteur 150 commandé par les relais à seuil 120 en cas de dépassement de la demande de chauffage, afin d'autoriser l'application des signaux provenant du régulateur classique 4 (lignes 6 et 7) sur la vanne mélangeuse 1 (moteur à commande 8) en vue de la mise en service des générateurs de chauffage classiques.

On a schématiquement représenté sur la figure 2 les sorties PAC 1, PAC 2, PAC 3, V, CH1 et CH2 du relais à seuil 120 adaptées pour commander respectivement la mise en service des générateurs auxiliaires PAC 1, PAC 2, PAC 3, ouverture de la vanne de dérivation V et la mise en service des générateurs de chauffage classiques CH1, CH2.

De façon connue en soi, le dispositif de commande 100 reçoit sur son entrée référencée E, J, P, un signal représentatif des périodes tarifaires de l'énergie électrique d'alimentation secteur pour mettre hors service le cas échéant, les sorties PAC 1, PAC 2, PAC 3 du relais à seuil.

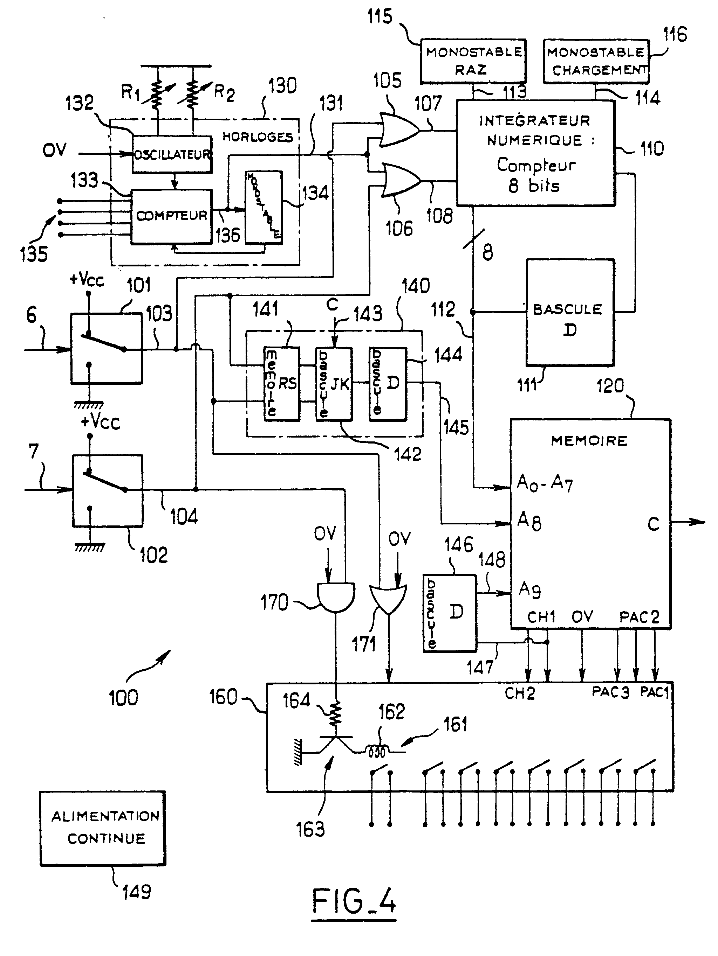

On va maintenant décrire la structure du dispositif de commande 100 illustré sur la figure 4.

On aperçoit sur cette figure deux interfaces d'entrée 101, 102, formées de relais contrôlées respectivement par les sorties 6 et 7 du régulateur classique 4 pour assurer une commutation des sorties 103, 104 des interfaces précitées entre deux niveaux logiques +Vcc et O Volt.

Les sorties 103, 104 des interfaces d'entrée 101, 102 attaquent respectivement une première entrée de deux

4

portes logiques 105, 106 dont les sorties 107, 108 sont reliées respectivement aux entrées de décomptage et de comptage de l'intégrateur numérique 110.

Ce dernier constitue sur le plan fonctionnel un compteur 8 bits.

Dans la pratique, l'intégrateur 110 peut être réalisé à l'aide de cinq compteurs/décompteurs binaires à 4 bits type CD 40193 disposés en cascade.

Les trois premiers compteurs réalisent une division par ($16^3$) de la fréquence d'un signal d'horloge appliqué sur la seconde entrée des portes 105, 106 précitées afin d'atteindre la résolution numérique nécessaire. Les deux derniers compteurs réalisent quant à eux la conversion numérique du signal intégré de régulateur.

Le signal d'horloge précité appliqué sur les secondesentrées des portes 105, 106 est généré par une horloge130.

De préférence, la fréquence du signal d'horloge délivrée sur la sortie 131 de l'horloge 130 peut être commutée entre deux valeurs afin de définir deux constantes d'intégration pour le dispositif de commande 100, utilisée l'une en phase de régulation sur pompes à chaleur, l'autre en phase de régulation sur vanne mélangeuse.

Les deux fréquences du signal d'horloge sont déterminées par des résistances respectives R1, R2, de préférence réglables, attaquant un oscillateur 132.

La commutation des résistances R1 ou R2 dans le circuit de charge de l'oscillateur 132 est réalisée par une sortie référencée OV (ouverture de vanne) du relais à seuil 120. Dans la pratique, la commutation des résistances R1, R2 peut être réalisée par un relais contrôlé par un transistor recevant sur sa base le signal OV.

L'oscillateur attaque un compteur 133, par exemple du type 40 193 câblé en décompteur. Lorsqu'il arrive à zéro, le décompteur 133 commande un monostable 134 qui, après un temps prédéterminé, charge le compteur 133 aux valeurs logiques définies sur ses entrées de pré-sélection 135.

La sortie 131 de l'horloge est définie par la sortie 136 du compteur.

Comme cela est schématiquement illustré sur la figure 4, les sorties de l'intégrateur numérique ou compteur 8 bits 110 sont reliées aux entrées d'un système de bascule D 111 qui mémorise en permanence l'état de l'intégrateur 110 et dont les sorties sont reliées aux entrées de présélection de l'intégrateur 110.

Le système à bascule D 111 est alimenté par une source d'alimentation électrique continue autonome.

Ainsi, lors d'une coupure secteur, tous les circuits sont arrêtés sauf les bascules D qui mémorisent les sorties binaires de l'intégrateur numérique 110.

Au retour du courant, le fil de chargement (LOAD) du compteur 110 est activé, et ainsi l'intégrateur numérique se charge à la dernière valeur précèdent la coupure mémorisée par le système de bascule D 111.

De ce fait, la sortie binaire de l'intégrateur numérique 110 est insensible aux coupures secteur.

Comme cela est illustré schématiquement par le bus 112, les sorties de l'intégrateur numérique 110 sont reliées aux huit premiers fils d'adresses d'une mémoire 120, telle qu'une mémoire EPROM 2732 de 8k bits.

Les entrées de remise à zéro 113 et de chargement 114 de l'intégrateur numérique 110 sont attaquées par des monostables respectifs 115, 116.

La temporisation de basculement induite par le monostable de chargement 116 est bien entendu supérieure au temps de basculement du monostable de remise à zéro 115.

Les monostables 115, 116 peuvent par exemple être formés de trigger de Schmidt à base d'amplificateurs opérationnels.

Lors d'une coupure de l'alimentation électrique secteur, les deux monostables sont activés, le monostable 115 commandant la remise à zéro de l'intégrateur numérique 110 puis le monostable 116 commandant le chargement de l'intégrateur 110 à la dernière valeur précédemment la coupure mémorisée par le système de bascule D 111.

A l'origine, lors d'une opération de mise en service ou de remise à zéro du dispositif de commande, le monostable de remise à zéro 115 peut être commandé seul grâce à un interrupteur ou bouton poussoir associé (non représenté sur la figure 4 pour simplifier l'illustration).

Comme cela est illustré sur la figure 3, pour obtenir une régulation stable, la courbe de commande des générateurs auxiliaires-pompes à chaleur PAC 1, PAC 2 et PAC 3 présente un fort hystérésis.

Pour cela, il est nécessaire de moduler les adresses validées de la mémoire 120 formant relais à seuil selon que les entrées de comptage ou de décomptage 107, 108 du module intégrateur 110 sont validées, c'est-à-dire selon que le dispositif de commande travaille dans le sens de l'enclenchement des dispositifs de chauffage auxiliaires PAC 1, PAC 2, PAC 3 ou dans le sens de l'arrêt de ceux-ci.

Une telle détection est opérée par l'ensemble illustré schématiquement 140.

Cet ensemble 140 comprend plus précisément une mémoire 141 type RS reliée par ses entrées aux sorties 103, 104 des interfaces 101, 102 et qui garde sur ses sorties Q, Q̄, la dernière impulsion comptage ou décomptage du régulateur 4. Cette information est transmise sur une bascule JK 142 lorsque le dispositif de commande n'est pas dans un hystérésis, cette dernière condition étant contrôlé par l'entrée 143 de la bascule JK 142 reliée à une sortie référencée C de la mémoire ou relais à seuil 120.

Enfin, l'information disponible à la sortie de la bascule JK 142 est mémorisée dans une bascule D, là encore alimentée par une source d'alimentation électrique continue autonome afin de conserver l'information en cas de coupure de l'alimentation électrique secteur.

La sortie 145 de la bascule D est reliée à la huitième ligne d'adresses de la mémoire 120.

Enfin, les inventeurs ont déterminé qu'il était souhaitable, pour des raisons de sécurité, de définir une commande à hystérésis de la première chaudière CH 1, tel que, dans le sens de l'enclenchement, la vanne s'ouvre avant la mise en service de la chaudière pour réchauffer le corps de chaudière CH1 , mais que dans le sens de l'arrêt, la vanne 1 soit fermée avant arrêt de la chaudière CH1.

Pour cela, là encore, il y a lieu de contrôler la validation des adresses de la mémoire 120 en fonction de la sortie de validation de la mise en service de la première chaudière CH1.

Cela est réalisé grâce à une bascule D 146 alimentée par une source d'alimentation électrique continue autonome, comme les bascules 111 et 144. L'entrée 147 de la bascule 146 est reliée à la sortie CH1 de la mémoire 120 tandis que la sortie 148 de la bascule D 146 est reliée à la neuvième ligne d'adresses A9 de la mémoire 120.

L'alimentation électrique continue alimentant les bascules D 111, 144 et 146 est schématiquement illustrée en 149 sur la figure 4.

On a également schématiquement représenté sur la figure 4 un circuit d'interfaces de sortie 160 comprenant un ensemble de relais 161 adapté pour contrôler la mise en service des générateurs auxiliaires PAC 1, PAC 2, PAC 3, des générateurs de chauffage classiques CH1, CH2, et la commande des vannes de dérivation V et mélangeuse 1.

Tel que cela est illustré schématiquement sur la figure 4, chaque bobinage 162 de relais 161 peut être commandé par un transistor 163 recevant sur son entrée de commande, par l'intermédiaire d'une résistance 164 un signal de contrôle.

Deux des relais 161 reliés aux entrées du moteur 8 de commande de vanne mélangeuse 1 sont contrôlés par les sorties respectives de deux portes 170, 171 dont une première entrée est reliée à la sortie OV de la mémoire 120 et dont les secondes entrées sont reliées respectivement aux sorties 103, 104 des interfaces 101, 102 afin d'appliquer sur la vanne mélangeuse V les signaux provenant du régulateur classique 4.

Les autres relais 161 sont commandés par les sorties CH1, CH2, OV, PAC 1, PAC 2, PAC 3 de la mémoire 120.

Le fonctionnement du dispositif de commande conforme à la présente invention sera mieux compris à l'examen des deux tableaux qui suivent et qui représentent les tables de programmation de la mémoire numérique 120.

La table de programmation n° 1 représente la zone des adresses basses, c'est-à-dire correspondant à un niveau logique zéro sur la ligne d'adresses A9 de la mémoire 120.

La table de programmation n° 2 correspond aux zones d'adresses hautes, c'est-à-dire à un signal logique de niveau 1 sur la ligne d'adresses A9 de la mémoire numérique 120.

Chacun de ces tableaux est divisé en deux soustableaux correspondant respectivement au comptage et au décomptage détectés par les moyens 140.

La division de chacune des tables de programmation en deux sous-tableaux de comptage et décomptage respectivement, permet de définir un cycle d'hystérésis pour la commande de chacun des dispositifs de l'installation (pompes à chaleur, vanne et chaudières).

Par ailleurs, la division de la programmation de la mémoire 120 en deux tables de programmation, l'une pour la zone d'adresses basses, l'autre pour la zone d'adresses hautes, permet de définir un cycle d'hystérésis pour la commande de l'enclenchement de la chaudière n° 1 tel que dans le sens de l'enclenchement, la vanne mélangeuse 1 s'ouvre avant la mise en service de la chaudière pour réchauffer le corps de la chaudière, mais que dans le sens de l'arrêt, la vanne soit fermée avant l'arrêt de la chaudière.

On rappelle que le fait d'ouvrir la vanne avant la mise en service de la chaudière a pour but de limiter la corrosion de la chaudière.

En effet, l'eau chaude de retour du réseau de chauffage a pu balayer la chaudière un certain temps et donc réchauffer ses parties froides sur lesquelles le phénomène de condensation des fumées aurait été important. Ce condensat est particulièrement acide (acide sulfurique) puisqu'il est formé par de la vapeur d'eau et du trioxyde de soufre dû à la présence de soufre dans le fuel.

Les sorties PAC 1, PAC 2 et PAC 3 de la mémoire numérique 120 commandent la mise en service des pompes à chaleur, selon des cycles à hystérésis illustrés sur la figure 3.

La sortie OV de la mémoire numérique 120 commande directement, également par un cycle à hystérésis la commutation de la vanne de dérivation V.

Les sorties CH1 et CH2 de la mémoire numérique 120 commandent la mise en service des chaudières CH1 et CH2 respectivement.

La sortie C de la mémoire numérique 120 fournit une information repérant les hystérésis du cycle et appliquée aux moyens de détection comptage/décomptage 140 comme cela a été précédemment évoqué.

Enfin, les portes 170, 171 contrôlées d'une part par la sortie OV de la mémoire numérique 120, d'autre part par les signaux fournie en sortie des interfaces d'entrée 101, 102 pilotent par modulation la vanne mélangeuse 1.

L'ouverture de la vanne mélangeuse 1 est initiée lors de la validation de la sortie OV de la mémoire numérique 120, et simultanément à la commutation de la vanne de dérivation V. De préférence, le système est adapté de telle sorte que la vanne mélangeuse 1 soit ouverte à 45 % lors de la mise en service de la première chaudière CH1.

Table de programmation n° 1-zone d'adresses basses: $A_9 = 0$

| Zones d'adresses $A_0 \rightarrow A_7 A_8$ | C | ch2 | ch1 | OV | PAC 3 | PAC 2 | PAC 1 | Sortie Hexa |
|---|---|---|---|---|---|---|---|---|
| **Comptage** | | | | | | | | |
| 00 | 1 | 0 | 0 | 0 | 0 | 0 | 0 | C0 |
| 01 → 09 | 1 | 0 | 0 | 0 | 0 | 0 | 0 | 40 |
| 0A → 2D | 0 | 0 | 0 | 0 | 0 | 0 | 0 | 00 |
| 2E → 31 | 1 | 0 | 0 | 0 | 0 | 0 | 1 | 41 |
| 32 → 55 | 0 | 0 | 0 | 0 | 0 | 0 | 1 | 01 |
| 56 → 59 | 1 | 0 | 0 | 0 | 0 | 1 | 1 | 43 |
| 5A → 7D | 0 | 0 | 0 | 0 | 0 | 1 | 1 | 03 |
| 7E → 81 | 1 | 0 | 0 | 0 | 1 | 1 | 1 | 47 |
| 82 → A5 | 0 | 0 | 0 | 0 | 1 | 1 | 1 | 07 |
| A6 → A9 | 1 | 0 | 0 | 1 | 1 | 1 | 1 | 4F |
| AA → CD | 0 | 0 | 0 | 1 | 1 | 1 | 1 | 0F |
| CE → D1 | 1 | 0 | 1 | 1 | 1 | 1 | 1 | 5F |
| D2 → DD | 0 | 0 | 1 | 1 | 1 | 1 | 1 | 1F |
| DE → E5 | 1 | 1 | 1 | 1 | 1 | 1 | 1 | 7F |
| E6 → FE | 1 | 1 | 1 | 1 | 1 | 1 | 1 | FF |
| FF | 0 | 1 | 1 | 1 | 1 | 1 | 1 | BF |
| **Décomptage** | | | | | | | | |
| 100 | 1 | 0 | 0 | 0 | 0 | 0 | 0 | C0 |
| 101 → 109 | 1 | 0 | 0 | 0 | 0 | 0 | 0 | 40 |
| 10A → 12D | 0 | 0 | 0 | 0 | 0 | 0 | 1 | 01 |
| 12E → 131 | 1 | 0 | 0 | 0 | 0 | 0 | 1 | 41 |
| 132 → 155 | 0 | 0 | 0 | 0 | 0 | 1 | 1 | 03 |
| 156 → 159 | 1 | 0 | 0 | 0 | 0 | 1 | 1 | 43 |
| 15A → 17D | 0 | 0 | 0 | 0 | 1 | 1 | 1 | 07 |
| 17E → 181 | 1 | 0 | 0 | 0 | 1 | 1 | 1 | 47 |
| 182 → 1A5 | 0 | 0 | 0 | 1 | 1 | 1 | 1 | 0F |
| 1A6 → 1A9 | 1 | 0 | 0 | 1 | 1 | 1 | 1 | 4F |
| 1AA → 1CD | 0 | 0 | 1 | 1 | 1 | 1 | 1 | 1F |
| 1CE → 1D1 | 1 | 0 | 1 | 1 | 1 | 1 | 1 | 5F |
| 1D2 → 1DD | 0 | 1 | 1 | 1 | 1 | 1 | 1 | 3F |
| 1DE → 1E5 | 1 | 1 | 1 | 1 | 1 | 1 | 1 | 7F |
| 1E6 → 1FE | 1 | 1 | 1 | 1 | 1 | 1 | 1 | FF |
| 1FF | 0 | 1 | 1 | 1 | 1 | 1 | 1 | BF |

Table de programmation n° 2-zone d'adresses hautes: $A_g = 1$

| Zones d'adresses $A_0 \rightarrow A_7A_8$ | C | ch2 | ch1 | OV | PAC 3 | PAC 2 | PAC 1 | Sortie Hexa |
|---|---|---|---|---|---|---|---|---|
| **Comptage** | | | | | | | | |
| 200 | 1 | 0 | 0 | 0 | 0 | 0 | 0 | C0 |
| 201 → 201 | 1 | 0 | 0 | 0 | 0 | 0 | 0 | 40 |
| 20A → 22D | 0 | 0 | 0 | 0 | 0 | 0 | 0 | 00 |
| 22E → 231 | 1 | 0 | 0 | 0 | 0 | 0 | 1 | 41 |
| 232 → 255 | 0 | 0 | 0 | 0 | 0 | 0 | 1 | 01 |
| 256 → 259 | 1 | 0 | 0 | 0 | 0 | 1 | 1 | 43 |
| 25A → 27D | 0 | 0 | 0 | 0 | 0 | 1 | 1 | 03 |
| 27E → 281 | 1 | 0 | 0 | 0 | 1 | 1 | 1 | 47 |
| 282 → 2A5 | 0 | 0 | 1 | 0 | 1 | 1 | 1 | 1F |
| 2A6 → 2A9 | 1 | 0 | 1 | 1 | 1 | 1 | 1 | 5F |
| 2AA → 2CD | 0 | 0 | 1 | 1 | 1 | 1 | 1 | 1F |
| 2CE → 2D1 | 1 | 0 | 1 | 1 | 1 | 1 | 1 | 5F |
| 2D2 → 2DD | 0 | 0 | 1 | 1 | 1 | 1 | 1 | 1F |
| 2DE → 2E5 | 1 | 1 | 1 | 1 | 1 | 1 | 1 | 7F |
| 2E6 → 2FE | 1 | 1 | 1 | 1 | 1 | 1 | 1 | FF |
| 2FF | 0 | 1 | 1 | 1 | 1 | 1 | 1 | BF |
| **Décomptage** | | | | | | | | |
| 300 | 1 | 0 | 0 | 0 | 0 | 0 | 0 | CO |
| 301 → 309 | 1 | 0 | 0 | 0 | 0 | 0 | 0 | 40 |
| 30A → 32D | 0 | 0 | 0 | 0 | 0 | 0 | 1 | 01 |
| 32E → 331 | 1 | 0 | 0 | 0 | 0 | 0 | 1 | 41 |
| 332 → 355 | 0 | 0 | 0 | 0 | 0 | 1 | 1 | 03 |
| 356 → 359 | 1 | 0 | 0 | 0 | 0 | 1 | 1 | 43 |
| 35A → 37D | 0 | 0 | 0 | 0 | 1 | 1 | 1 | 07 |
| 37E → 381 | 1 | 0 | 0 | 0 | 1 | 1 | 1 | 47 |
| 382 → 3A5 | 0 | 0 | 1 | 1 | 1 | 1 | 1 | 1F |
| 3A6 → 3A9 | 1 | 0 | 1 | 1 | 1 | 1 | 1 | 5F |
| 3AA → 3CD | 0 | 0 | 1 | 1 | 1 | 1 | 1 | 1F |
| 3CE → 301 | 1 | 0 | 1 | 1 | 1 | 1 | 1 | 5F |
| 3D2 → 3DD | 0 | 1 | 1 | 1 | 1 | 1 | 1 | 3F |
| 3DE → 3E5 | 1 | 1 | 1 | 1 | 1 | 1 | 1 | 7F |
| 3E6 → 3FE | 1 | 1 | 1 | 1 | 1 | 1 | 1 | FF |
| 1FF | 0 | 1 | 1 | 1 | 1 | 1 | 1 | BF |

## Revendications

1. Procédé de transformation d'une installation de chauffage préexistante comprenant un générateur de chauffage principal, du genre chaudière (2), associé à une vanne mélangeuse modulante (1) pilotée par un régulateur (4) de type P ou PD sensible d'une part à la température extérieure, d'autre part à la température de départ d'eau, par adjonction d'une pluralité de générateurs auxiliaires tels que des pompes à chaleur (PAC 1, PAC 2, PAC 3) en relève du générateur de chauffage principal et avec conservation des régulateur (4) et vanne (1) existants, caractérisé par le fait qu'il comprend l'étape consistant à insérer entre le régulateur préexistant et la vanne préexistante un dispositif de commande (100) comprenant un module intégrateur (110), des relais à seuils (120) et un interrupteur (150), en connectant l'entrée du module intégrateur (110) à la sortie du régulateur préexistant, en connectant les entrées des relais à seuils (120) à la sortie du module intégrateur (110), en connectant les sorties des relais à seuils (120) aux entrées respectives de mise en service des générateurs auxiliaires (PAC 1, PAC 2, PAC 3), de telles sorte que les générateurs auxiliaires soient mis successivement en service lors de la détection de seuils respectifs par les relais, en connectant l'interrupteur (150) entre la sortie du régulateur préexistant et l'entrée de commande de la vanne mélangeuse et en connectant une sortie des relais à seuils validée en cas de dépassement de la demande de chauffage à une entrée de contrôle de l'interrupteur (150), afin d'autoriser, en cas de dépassement de la demande de chauffage, l'application des signaux provenant du régulateur préexistant (4), sur la vanne melangeuse (1).

2. Dispositif de commande pour la mise en oeuvre du procédé selon la revendication 1, caractérisé par le fait qu'il comprend:
- un module intégrateur (110) dont l'entrée est destinée à être reliée à la sortie d'un régulateur préexistant,
- des relais à seuils (120) dont les entrées sont reliées à la sortie du module intégrateur (110), et les sorties sont destinées à être reliées aux entrées respectives de mise en service de générateurs auxiliaires, et
- un interrupteur (150) destiné à être connecté entre la sortie de régulateur préexistant et l'entrée de commande de la vanne mélangeuse, une entrée de contrôle de l'interrupteur (150) étant connectée à une sortie des relais à seuils qui est validée en cas de dépassement de la demande de chauffage.

3. Dispositif de commande selon la revendication 2, caractérisé par le fait que le module intégrateur (110) comprend au moins un compteur/décompteur numerique.

4. Dispositif de commande selon la revendication 3, caractérisé par le fait qu'il comprend deux relais (101, 102) commandés par les sorties (6, 7) du régulateur classique (4) et servant à valider alternativement les entrées de comptage et de décomptage du module intégrateur (110).

5. Dispositif de commande selon la revendication 4, caractérisé par le fait qu'il comprend deux portes logiques (105, 106) à deux entrées dont les sorties (107, 108) attaquent respectivement les entrées de comptage et de décomptage du module intégrateur (110), l'une des entrées des portes logiques étant attaquée par un relais respectif (101, 102), tandis que la seconde entrée de chaque porte logique (101, 102) est reliée à la sortie d'une horloge (130) délivrant un signal oscillatoire de fréquence réglable.

6. Dispositif de commande selon l'une des revendications 3 à 5, caractérisé par le fait que le relais à seuils (120) comprend une memoire numérique ayant des lignes d'adresse (A0 - A7) reliées aux sorties du module intégrateur (110).

7. Dispositif de commande selon l'une des revendications 3 à 6, caractérisé par le fait qu'il comprend un organe de mémorisation (111) dont les entrées sont reliées aux sorties du compteur/décompteur numerique (110) et les sorties sont reliées aux entrées de présélection de ce dernier pour recharger le module intégrateur (110)) après une coupure d'alimentation secteur à l'état occupé par ce module avant la coupure.

8. Dispositif de commande selon l'une des revendications 2 à 7, prise en combinaison avec la revendication 6, caractérisé par le fait qu'il comprend un organe de mémorisation (146) dont l'entrée (147) est connectée en sortie (CH1) de la mémoire numérique (120) contrôlant la mise en service d'une première chaudière et dont la sortie (148) est reliée, à une ligne d'adresse (A9) de la mémoire numérique pour définir une commande à hystérésis de cette première chaudière, telle que dans le sens de l'enclenchement, la vanne (1) s'ouvre avant la mise en service de la chaudière pour réchauffer le corps de la chaudière, mais que dans le sens de l'arrêt, la vanne (1) soit fermée avant arrêt de la chaudière.

9. Dispositif de commande selon la revendication 6, caractérisé par le fait qu'il comprend des moyens (140) aptes à détecter la validation des entrées de comptage ou de décomptage du module intégrateur (110) et dont la sortie (145) est reliée à une ligne d'adresse (A8) de la mémoire numérique (120) pour déterminer des commandes à hystérésis des générateurs auxiliaires (PAC 1, PAC 2, PAC 3).

10. Dispositif de commande selon la revendication 9, caractérisé par le fait que la sortie (145) des moyens (140) de détection de la validation des entrées de comptage ou de décomptage du module intégrateur (110) est reliée à la ligne d'adresse (A8) associée de la mémoire numérique (120) par l'intermédiaire d'un organe de mémorisation (144).

11. Dispositif de commande selon l'une des revendications 7, 8 ou 10, caractérisé par le fait que les organes de mémorisation (111, 144, 146) sont constitués de bascules alimentées par une source d'alimentation électrique continue (149).

**Patentansprüche**

1. Verfahren zum Umwandeln einer bestehenden Heizungsinstallation mit einem Haupt-Heizgenerator in der Art eines Heizkessels (2), der einem modulierenden Mischventil (1) zugeordnet ist, welches von einem P- oder PD-Regler (4) gesteuert wird, der einerseits auf die Außentemperatur anspricht und andererseits auf die Wasserauslaßtemperatur, durch Hinzufügen von mehreren Hilfsgeneratoren, wie zum Beispiel Wärmepumpen (PAC 1, PAC 2, PAC 3), zum Entlasten des Haupt-Heizgenerators und unter Erhaltung von vorhandenem Regler (4) und Ventil (1), gekennzeichnet durch die Tatsache, daß es den Schritt umfaßt, der darin besteht, daß zwischen den bereits vorhandenen Regler und das bereits vorhandene Ventil eine Steuereinrichtung (100) eingefügt wird, die ein Integratormodul (100), Schwellwertrelais (120) und einen Unterbrecher (150) umfaßt, indem der Eingang des Zntegratormoduls (110) mit dem Ausgang des vorhandenen Reglers verbunden wird, indem die Eingänge der Schwellwertrelais (120) mit dem Ausgang des Integratormoduls (110) verbunden werden, indem die Ausgänge der Schwellwertrelais (120) mit den betreffenden Einschalteingängen der Hilfsgeneratoren (PAC 1, PAC 2, PAC 3) verbunden werden, und zwar derart daß die Hilfsgeneratoren nacheinander in Betrieb genommen werden, wenn von den Relais entsprechende Schwellwerte erfaßt werden, indem der Unterbrecher (150) zwischen den Ausgang des vorhandenen Reglers und den Steuereingang des Mischventils eingefügt wird und indem ein Ausgang der Schwellwertrelais, der für den Fall aktiviert wird, daß die erforderliche Heizleistung überschritten wird, mit einem Steuereingang des Unterbrechers (150) verbunden wird, um im Falle eines Überschreitens des Heizleistungsbedarfs das Anlegen von Signalen des vorhanden Reglers (4) an das Mischventil (1) freizugeben.

2. Regelgerät zur Durchführung des Verfahrens nach Anspruch 1, gekennzeichnet durch die Tatsache, daß es umfaßt:

- ein Integratormodul (110), dessen Eingang dazu bestimmt ist, mit dem Ausgang eines bereits vorhandenen Reglers verbunden zu werden;
- Schwellwertrelais, deren Eingänge mit dem Ausgang des Integratormoduls (110) verbunden sind und deren Ausgänge dazu bestimmt sind, mit den betreffenden Eingängen zum Einschalten von Hilfsgeneratoren verbunden zu werden und
- einen Unterbrecher (150), der dazu bestimmt ist, zwischen den Ausgang des vorhandenen Reglers und den Steuereingang des Mischventils eingeschaltet zu werden, wobei ein Steuereingang des Unterbrechers (150), der mit einem Ausgang der Schwellwertrelais verbunden ist, im Fall der Überschreitung des Heizleistungsbedarfs aktiviert wird.

3. Regelgerät nach Anspruch 2, gekennzeichnet durch die Tatsache, daß das Integratormodul (110) mindestens einen numerischen Aufwärts-Abwärts-Zähler umfaßt.

4. Regelgerät nach Anspruch 3, gekennzeichnet durch die Tatsache, daß es zwei Relais (101, 102) umfaßt, die von den Ausgängen (6, 7) des klassischen Reglers (4) gesteuert werden und zum alternativen Aktivieren des Aufwärtszähleingangs und des Abwärtszähleingangs des Integratormoduls (110) dienen.

5. Regelgerät nach Anspruch 4, gekennzeichnet durch die Tatsache, daß es zwei logische Gatter (105, 106) mit jeweils zwei Eingängen umfaßt, deren Ausgänge (107, 108) den Auswärtszähleingang bzw. den Abwärtszähleingang des Integratormoduls (110) ansteuern, wobei der eine Eingang der logischen Gatter durch ein entsprechendes Relais (101, 102) angesteuert wird, während der zweite Eingang jedes logischen Gatters (101, 102) mit dem Ausgang eines Taktgenerators (130) verbunden ist, der ein oszillierendes Signal mit regelbarer Frequenz liefert.

6. Regelgerät nach einem der Ansprüche 3 bis 5, gekennzeichnet durch die Tatsache, daß das Schwellwertrelais (120) einen numerischen Speicher mit Adressenleitungen (A0 - A7) umfaßt, die mit Ausgängen des Integratormoduls (110) verbunden sind.

7. Regelgerät nach einem der Ansprüche 3 bis 6, gekennzeichnet durch die Tatsache, daß es ein Speicherorgan (111) umfaßt, dessen Eingänge mit den Ausgängen des numerischen Aufwärts-Abwärts-Zählers (110) verbunden sind und dessen Ausgänge mit Vorwähleingängen des letzteren verbunden sind, um das Integratormodul (110) nach einem Netzausfall wieder in den von ihm vor dem Netzausfall eingenommen Zustand zurückzusetzen.

8. Regelgerät nach einem der Ansprüche 2 bis 7 in Kombination mit Anspruch 6, gekennzeichnet durch die Tatsache, daß es ein Speicherorgan (146) umfaßt, dessen Eingang (147) mit dem Ausgang (CH1) des numerischen Speichers (120) verbunden ist, der das Einschalten des ersten Heizkessels steuert und dessen Ausgang (148) mit einer Adressenleitung (A9) des numerischen Speichers verbunden ist, um einen Befehl mit Hysterese für diesen ersten Heizkessel zu definieren, derart daß sich das Ventil (1) beim Einschalten öffnet, ehe der Heizkessel in Betrieb genommen wird, um den Körper des Heizkessels aufzuheizen, aber derart, daß das ventil (1) beim Abschalten geschlossen wird, ehe der Heizkessel abgeschaltet wird.

9. Regelgerät nach Anspruch 6, gekennzeichnet durch die Tatsache, daß es Einrichtungen (140) umfaßt, die das Aktivieren des Aufwärtszähleingangs oder des Abwärtszähleingangs des Integratormoduls (110) erfassen können und deren Ausgang (145) mit einer Adressenleitung (A8) des numerischen Speichers (120) verbunden ist, um für die Hilfsgeneratoren (PAC 1, PAC 2, PAC 3) Befehle mit Hysterese zu erzeugen.

10. Regelgerät nach Anspruch 9, gekennzeichnet durch die Tatsache, daß der Ausgang (145) der Einrichtungen zum Erfassen der Aktivierung des Aufwärtszähleingangs oder des Abwärtszähleingangs des Integratormoduls (110) mit einer Adressenleitung (A8), die dem numerischen Speicher (120) zugeordnet ist, über ein Speicherorgan (144) verbunden ist.

11. Regelgerät nach einem der Ansprüche 7, 8 oder 10, gekennzeichnet durch die Tatsache, daß die Speicherorgane (111, 144, 146) durch Kippschaltungen gebildet sind, die durch eine kontinuierlich arbeitende elektrische Speisespannungsquelle (149) gespeist sind.

## Claims

1. A method of transforming a pre-existing heating installation comprising a main heat generator such as a boiler (2) associated with a modulating mixer valve (1) controlled by a P or PD type regulator (4) responsive to the outside temperature and to the water departure temperature, by adding a plurality of auxiliary heat generators such as heat pumps (PAC 1, PAC 2, PAC 3) to said installation to offload said main heat generator while retaining said pre-existing regulator (4) and valve (1), characterised by the fact that it comprises the step consisting to insert between the pre-existing regulator and the pre-existing valve a control device (100) which comprises an integrating module (100), threshold relays (120) and a switch (150), by connecting the input of the integrating module (110) to the output of the preexisting regulator, by connecting the inputs of the threshold relays (120) to the output of the integrating module (110), by connecting the outputs of the threshold relays (120) to the respective inputs for switching on of the auxiliary generators (PAC 1, PAC 2, PAC 3), so that the auxiliary generators are successively switched on upon detection of the respective thresholds by the relays, by connecting the switch (150) between the output of the pre-existing regulator and the control input of the mixer valve, and by connecting an output of the threshold relays which is activated in case of excessive heat demand to a control input of the switch (150) so as to authorize, in case of excessive heat demand, the application of the signals coming from the pre-existing regulator (4), to the mixer valve (1).

2. A control device for implementing the method according to claim 1, characterised in that it comprises:

- an integrating module (110) the input of which is adapted to be connected to the output of the preexisting regulator threshold relays (120) the inputs of which are connected to the output of the integrating module (110) and the outputs are adapted to be connected to the respective inputs for switching on of the auxiliary generators, and

- a switch (150) adapted to be connected between the output of the pre-existing regulator and the control input of the mixer valve, a control input of the switch (150) being connected to an output of the threshold relays which is activated in case of excessive heat demand.

3. A control device according to claim 2, characterised by the fact that the integrator module (110) includes at least one digital up/down counter.

4. A control device according to claim 3, characterised by the fact that it comprises two relays (101, 102) controlled by the outputs (6, 7) of the pre-existing regulator (4) and adapted to activate alternatively the count up input and the count down input of the integrating module (110).

5. A control device according to claim 4, characterised by the fact that it comprises two 2-input logic gates (105, 106) whose outputs (107, 108) are respectively connected to the count-up and the count-down inputs of the integrator module (110), with first inputs to the logic gates being controlled by respective ones of said relays (101, 102), while the second inputs of the logic gates (105, 106) are connected to the output from a clock (130) which delivers an alternating signal of adjustable frequency.

6. A control device according to one of claims 3 to 5, characterised by the fact that said threshold relay (120) comprises a digital memory having address lines (A0 - A7) connected to outputs from the integrator module (110).

7. A control device according to one of claims 3 to 6, characterised by the fact that it comprises a memory member (111) whose inputs are connected to the outputs from the digital up/down counter (110) and whose outputs are connected to the pre-select inputs of said up/down counter in order to reload the integrator module (110) after a power cut to return said integrator module to its state immediately preceding the power cut.

8. A control device according to one of claims 2 to 7, taken into combination with claim 6, characterized by the fact that it includes a memory member (146) having its input (147) connected to the output (CH1) of the digital memory (120) which provides on/off control of a first boiler and whose output (148) is connected to an address line (A9) of the digital memory in order to define a hysteresis cycle in the control of said first boiler such that when said boiler is switched on, said mixer valve (1) is switched on prior to said boiler in order to warm the body of the boiler, whereas when said boiler is switched off, said mixer valve (1) is closed prior to said boiler being switched off.

9. A control device according to claim 6, characterised by the fact that it includes means (140) suitable for detecting when the count-up and the count-down inputs of the integrator module (110) are enabled, and having an output (145) connected to an address line (A8) of the digital memory (120) to provide a hysteresis cycle in the control of the auxiliary generators (PAC 1, PAC 2, PAC 3).

10. A control device according to claim 9, wherein the output (145) from said means (140) for detecting when the count-up and the count-down inputs to the integrator module (110) are enabled is connected to said address line (A8) associated with the digital memory (120) via a memory member (144).

11. A control device according to any one of claims 7, 8, or 10, wherein said memory members (111, 144, 146) are constituted by bistables which are powered by an uninterruptible DC power supply (149).

# FIG.1    Régulation Préexistante

# FIG.2

FIG_3

3

FIG_4